# EUROPÄISCHE PATENTANMELDUNG

(11) **EP 1 974 975 A1**
(43) Veröffentlichungstag der Anmeldung: **01.10.2008**
(21) Anmeldenummer: 08004124.7
(22) Anmeldetag: 06.03.2008
(51) Int. Cl.: B60K 15/03

(54) **Kraftstoffbehälter für Nutzfahrzeuge**

(30) Priorität: 30.03.2007 DE 102007015779; 27.08.2007 DE 102007040416
(71) Anmelder: Erhard & Söhne GmbH, 73529 Schwäbisch Gmünd (DE)
(72) Erfinder: Klein, Steffen, 73525 Schwäbisch Gmünd (DE)
(74) Vertreter: Lorenz, Markus

(57) **Zusammenfassung**

Die Erfindung betrifft einen Kraftstoffbehälter (1) für Nutzfahrzeuge mit einer Umfangswandung (2), welche wenigstens einen ersten Befüllraum (3) zur Aufnahme eines flüssigen oder gasförmigen Mediums ausbildet. In wenigstens eine offene Stirnseite der Umfangswandung (2) ist ein Kunststoffbehälter (5) eingesetzt, dessen hinteres Teilstück (5a) in die Umfangswandung (2) ragt und mit der Umfangswandung (2) verbunden ist und dessen vorderes Teilstück (5b) über die Stirnseite der Umfangswandung (2) übersteht.

## Beschreibung

Die Erfindung betrifft einen Kraftstoffbehälter für Nutzfahrzeuge, mit einer Umfangswandung, welche wenigstens einen ersten Befüllraum zur Aufnahme eines flüssigen oder gasförmigen Mediums ausbildet, gemäß dem Oberbegriff von Anspruch 1.

Ein gattungsgemäßer Kraftstoffbehälter ist aus der DE 202 08 040 A1 bekannt.

Bei dem gattungsgemäßen Kraftstoffbehälter setzt sich die Außenhülle aus einer Umfangswandung zusammen, welche stirnseitig durch jeweils eine Stirnwandung abgeschlossen ist. In der Regel ist die Umfangswandung rohrförmig ausgebildet, wobei an deren beiden offenen Enden die Stirnwandungen (Stirnseiten) aufgeschweißt sind. Es sind jedoch auch Kraftstoffbehälter bekannt, die sich aus einem oder mehreren hülsenförmigen Teilen zusammensetzen, bei denen wenigstens ein Teil der Umfangswandung einstückig mit der Stirnwandung ist.

Je nach Ausgestaltung des Kraftstoffbehälters kann dieser einen oder mehrere voneinander getrennte Befüllräume aufweisen. Bekannt ist dabei auch, dass in der Umfangswandung eine oder mehrere Zwischenwände, beispielsweise in Form von Schwallwänden oder in Form von Trennwänden zur Unterteilung des Kraftstoffbehälters angeordnet sind.

Kraftstoffbehälter für Nutzfahrzeug sind in der Regel aus Edelstahl, Stahl, Aluminium oder entsprechenden Legierungen hergestellt. Möglich ist es auch, die Umfangswandung und die Zwischenwände aus unterschiedlichen Materialien herzustellen, beispielsweise die Zwischenwände aus Kunststoff und die Umfangswandung aus Metall. Bekannt sind auch Kraftstoffbehälter, deren Außenhüllen vollständig aus Kunststoff gebildet sind.

Aus der Praxis ist es bekannt, den Kraftstoffbehälter zusätzlich zu einem Einfüllstutzen mit verschiedenen Funktionselementen, beispielsweise Filtern, Heizelementen, Kühlelementen, Wasserabscheidern oder dergleichen, zu versehen, welche in der Regel an der Umfangswandung befestigt werden.

Im Nutzfahrzeugbereich entstand in den letzten Jahren - bedingt durch wachsende Anforderungen an die Umweltverträglichkeit derartiger Fahrzeuge - ein Bedarf an Kraftstoffbehältern, deren Funktion über die eines konventionellen Kraftstoffbehälters hinausgeht. So wurde es beispielsweise in jüngerer Zeit erforderlich, im Rahmen der Maßnahmen zur Schadstoffreduzierung, zum Beispiel bei der Entstickung von Dieselabgasen, Harnstoff bzw. Ad Blue im Abgassystem von Nutzfahrzeugen einzusetzen. Damit entstand ein Bedarf an Tanks, die zum Mitführen des benötigten, chemisch aggressiven Harnstoffs geeignet sind. Herkömmliche Nutzfahrzeuge weisen hierzu zwei unabhängige Tanks auf, die voneinander getrennt am Nutzfahrzeug angebracht sind.

Aus dem allgemeinen Stand der Technik ist es dabei bekannt, Anbauteile an bestehende Kraftstoffbehälter durch Kleben, Schrauben, Nieten oder Schweißen anzubringen. Bekannt ist es zudem, den Kraftstoffbehälter durch eine Trennwand zu unterteilen, so dass zwei voneinander getrennte Innenräume entstehen.

Eine besonders vorteilhafte Lösung zur Mitführung eines chemisch aggressiven gasförmigen oder flüssigen Mediums ist in der DE 20 2006 002 035.7 beschrieben. Dabei ist vorgesehen, dass die Innenseite der Tragstruktur eines Behälters mit einer Kunststoff-Sinterschicht bedeckt ist. Hierzu ist die Tragstruktur aus einem vergleichsweise steifen Material, wie beispielsweise einem Metall, gefertigt, auf deren Innenwandung die dünne Kunststoff-Sinterschicht aufgebracht ist. Dabei kann vorgesehen sein, dass der mit der Kunststoff-Sinterschicht versehene Behälter durch eine umlaufende Schweißnaht mit einem zweiten Behälter, bei dem es sich um einen regulären Kraftstoffbehälter handeln kann, verbunden wird.

Die Lösung hat sich für viele Anwendungsgebiete als geeignet herausgestellt in kostengünstiger Art und Weise einen aus zwei Teilbehältern gebildeten gemeinsamen großen Behälter zu schaffen und diesen in üblicher Weise an einer Halterungseinrichtung, beispielsweise einer Konsole eines Nutzfahrzeuges, anzubringen.

Eine weitere Anforderung im Nutzfahrzeugbereich besteht darin, dass die Kraftstoffbehälter den zur Verfügung stehenden Bauraum möglichst effektiv ausnutzen sollen, wobei der Kraftstoffbehälter trotzdem kostengünstig in der Herstellung sein soll. Eine effektive Nutzung des Bauraums scheitert bislang daran, dass mit einfachen geometrischen Formen nur ein Teil des Bauraums erschlossen werden kann. Insbesondere an den vorderen und hinteren Enden des Tanks wird der Bauraum durch verschiedene Anbauteile, z. B. ein Endrohr des Abgassystems, Radkästen oder dergleichen, derart beschränkt, dass der Tank eine komplexe Form aufweisen müsste, wenn der Bauraum genutzt werden soll. Eine derartige komplexe Form lässt sich durch den hohen Bearbeitungsaufwand des Metalls jedoch nur mit unverhältnismäßig hohen Kosten bzw. technisch nicht realisieren.

Der vorliegenden Erfindung liegt die Aufgabe zugrunde, einen Kraftstoffbehälter zu schaffen, der die Nachteile des Standes der Technik löst, insbesondere in einfacher und kostengünstiger Weise den zur Verfügung stehenden Bauraum effektiv nutzt.

Diese Aufgabe wird erfindungsgemäß durch Anspruch 1 gelöst.

Diese Aufgabe wird erfindungsgemäß auch durch Anspruch 26 gelöst.

Die erfindungsgemäßen Lösungen ermöglichen es, einen Kraftstoffbehälter zu schaffen, der den zur Verfügung stehenden Bauraum eines Nutzfahrzeugs effektiv nutzt. Dies ist dadurch möglich, dass die Umfangswandung, welche einen ersten Befüllraum bildet, im wesentlichen in herkömmlicher Art und Weise hergestellt werden kann. Die Umfangswandung kann dabei eine einfach und somit kostengünstig herstellbare geometrische Form aufweisen. Vorteilhaft ist es hierbei, wenn der durch die Umfangswandung gebildete erste Befüllraum so groß ist, wie dies der Bauraum unter Verwendung einfacher geometrischer Formen ermöglicht.

Zur Ausnutzung des Bauraums des Nutzfahrzeugs, welcher nicht durch eine einfache geometrische Form erschlossen werden kann, wird an wenigstens einer Stirnseite durch den erfindungsgemäßen Kunststoffbehälter ein zusätzlicher Befüllraum geschaffen. Der Kunststoffbehälter kann dabei mit bekannten Verfahren, beispielsweise durch Sintern, in einfacher und kostengünstiger Weise in eine Form gebraucht werden, die an den Bauraum angepasst ist, welcher als zusätzlicher Befüllraum Verwendung finden soll. Komplexe Formen lassen sich mit dem Kunststoffbehälter in einfacher Art und Weise herstellen.

Von Vorteil ist es, wenn die Umfangswandung aus Metall, vorzugsweise aus Aluminium, Stahl, Edelstahl oder einer Legierung der vorgenannten Metalle gebildet ist. Somit kann die Umfangswandung mit bekannten Methoden in einfacher und kostengünstiger Weise hergestellt werden. Es entsteht ein Kraftstoffbehälter in Hybridbauweise, dessen Befüllräume wenigstens aus zwei unterschiedlichen Materialien gebildet sind, nämlich Metall und Kunststoff.

Der Kraftstoffbehälter weist durch die erfindungsgemä-ße Lösung zwei Befüllräume zur Aufnahme eines flüssigen oder gasförmigen Mediums auf. Dabei kann vorgesehen sein, dass die beiden Befüllräume über herkömmliche Verbindungen miteinander verbunden sind bzw. miteinander korrespondieren. Dies kann beispielsweise dadurch erfolgen, dass zur Verbindung der Befüllräume wenigstens eine Verbindungsleitung vorgesehen ist. Bei der Verbindungsleitung kann es sich beispielsweise um ein Rohr oder einen Schlauch handeln. Vorzugsweise kann in die Umfangswandung und den Kunststoffbehälter jeweils eine Verbindungsmuffe eingeschweißt und/oder eingesintert sein, welche zu den zugeordneten Befüllräumen führt, wobei die Verbindungsmuffen über die Verbindungsleitungen miteinander verbunden sind. Daraus lässt sich eine besonders einfache und kostengünstige Verbindung herstellen. Die Verbindung der beiden Befüllräume ermöglicht es zudem, dass die Befüllräume einen gemeinsamen Einfüllstutzen und/oder weitere gemeinsame Funktionselemente aufweisen können.

In einer Ausgestaltung der Erfindung kann auch vorgesehen sein, dass der durch den Kunststoffbehälter geschaffen zweite Befüllraum mit dem ersten Befüllraum nicht verbunden und zur Aufnahme eines zusätzlichen flüssigen oder gasförmigen Mediums, vorzugsweise eines weiteren Kraft- oder Betriebsstoffes ausgebildet ist. Der durch den Kunststoffbehälter geschaffene Befüllraum eignet sich dabei besonders zur Aufnahme von Kraft- oder Betriebsstoffen, die aufgrund deren chemischer Aggressivität eine nichtmetallische Hülle benötigen. Hierbei kann es sich vorzugsweise um einen Harnstoff bzw. Ad Blue handeln. Grundsätzlich ist jedoch auch die Aufnahme von anderen Kraft- oder Betriebsstoffen, wie z. B. Biodiesel, einen Zweitkraftstoff, eine Betriebsstoffkomponente bzw. Drittbetriebsstoffkomponente, möglich. Eine Aufnahme von Wasser in dem zweiten Befüllraum bietet sich dann an, wenn in dem Kraftstoffbehälter ein Wasserabscheider integriert ist, durch welchen aus dem in den ersten Befüllraum eingebrachten Medium Wasser abgesondert wird.

Grundsätzlich kann, unabhängig davon, ob der erste Befüllraum mit dem zweiten Befüllraum verbunden ist, vorgesehen sein, dass der erste Befüllraum - in bekannter Weise - in zwei oder mehrere Befüllräume unterteilt ist. Dies kann dadurch erfolgen, dass der erste Befüllraum mit Zwischenwänden in Form von Trennwänden versehen ist. Somit kann z. B. eine Ausführungsform geschaffen werden, in der im ersten Befüllraum Biodiesel eingebracht ist (Haupttank), der zweite durch den Kunststoffbehälter geschaffene Befüllraum für Harnstoff oder Ad Blue vorgesehen ist und ein dritter Befüllraum, der durch eine Trennwand in der Umfangswandung vom ersten Befüllraum abgegrenzt ist, zur Aufnahme eines normalen Diesels, beispielsweise für eine Standheizung, dient. Gegebenenfalls kann aus dem ersten Befüllraum auch noch ein vierter Befüllraum zur Aufnahme eines Hydraulikmediums oder dergleichen abgetrennt werden. Derartige Unterteilungen sind aus dem allgemeinen Stand der Technik bekannt.

Zur Verbindung der Befüllräume können anstelle der Verbindungsmuffen auch ohnehin vorhandene Ablassmuffen eingesetzt werden.

Der Kunststoffbehälter kann im wesentlichen eine Form aufweisen, welche an den zur Verfügung stehenden Bauraum eines Nutzfahrzeuges angepasst ist. Erfindungsgemäß kann dabei z. B. vorgesehen sein, dass der Kunststoffbehälter wenigstens eine Einbuchtung aufweist, die einen Freiraum zur Aufnahme eines Endbereichs eines Abgassystems des Nutzfahrzeugs schafft. Des weiteren kann erfindungsgemäß auch vorgesehen sein, dass der Kunststoffbehälter wenigstens annähernd an den Verlauf eines Radkastens oder weiterer Anbauteile des Nutzfahrzeuges angepasst ist.

Durch die Umfangswandung und den Kunststoffbehälter werden zwei voneinander getrennte Befüllräume geschaffen, die in sich abgeschlossen sind, so dass an den Verbindungsbereiche zwischen dem Kunststoffbehälter und dem durch die Umfangswandung gebildeten ersten Befüllraum keine Dichtigkeitsprobleme auftreten.

Es sind somit erfindungsgemäß zwei separate Kraftstoffbehälter geschaffen worden, die zu einem Kraftstoffbehälter vereint sind, welcher in einfacher Art und Weise an einem Nutzfahrzeug befestigt werden kann. Die Verbindung des Kraftstoffbehälters erfolgt dabei im Regelfall über eine Konsole des Nutzfahrzeugs. Erfindungsgemäß kann dabei vorgesehen sein, dass die Konsole des Nutzfahrzeugs mehrere Konsolenelemente zur Anlage des Kraftstoffbehälters aufweist, wobei ein Konsolenelement im Bereich der Verbindung zwischen der Umfangswandung und dem Kunststoffbehälter und/oder direkt an dem Kunststoffbehälter verläuft, so dass hierdurch eine stabile Verbindung des Kraftstoffbehälters an dem Nutzfahrzeug geschaffen wird. Durch diese Anordnung ist es auch möglich, dass ein Spannband zur Fixierung des Kraftstoffbehälters an dem Konsolenelement im Verbindungsbereich zwischen der Umfangswandung und dem Kunststoffbehälter und/oder entlang des Kunststoffbehälters verläuft.

Erfindungsgemäß kann vorgesehen sein, dass der durch die Umfangswandung gebildete erste Befüllraum den Haupttank bzw. Hauptbefüllraum bildet und der durch den Kunststoffbehälter geschaffene zweite Befüllraum lediglich als deutlich kleinerer ergänzender Befüllraum dient.

Von Vorteil ist es, wenn die Anbindung des Kunststoffbehälters an die Umfangswandung dadurch geschaffen wird, dass der Kunststoffbehälter in eine offene Stirnseite der Umfangswandung eingesteckt bzw. eingesetzt wird. Dies kann dadurch erfolgen, dass in wenigstens eine offene Stirnseite der Umfangswandung ein Kunststoffbehälter eingesetzt ist, dessen hinteres Teilstück in die Umfangswandung ragt und mit der Umfangswandung verbunden ist und dessen vorderes Teilstück über die Stirnseite der Umfangswandung übersteht.

Dadurch kann in einfacher Weise eine zuverlässige und dauerhafte Fixierung des Kunststoffbehälters in der Umfangswandung zumindest in zwei Richtungen bzw. radial zur Längsachse des Kraftstoffbehälters erreicht werden. Eine Fixierung des Kunststoffbehälters in der Umfangswandung derart, dass sich der Kunststoffbehälter nicht in Längsrichtung (Fahrtrichtung) des Kraftstoffbehälters bewegen kann, kann auf verschiedene Art und Weise erreicht werden. Besonders vorteilhaft ist es dabei, wenn das hintere Teilstück des Kunststoffbehälters in die Umfangswandung eingesintert ist. Dabei kann das hintere Teilstück des Kunststoffbehälters und die Umfangswandung, in welche der Kunststoffbehälter eingesetzt ist, eine Form und/oder einen Verlauf aufweisen, der nach dem Einsintern zu einer Fixierung des Kunststoffbehälters in der Umfangswandung führt. Hierzu eigenen sich z. B. Vorsprünge, Rücksprünge, Hinterschneidungen, Noppen, Nippel oder dergleichen.

In einer Weiterbildung der Erfindung kann ferner vorgesehen sein, dass das hintere Teilstück des Kunststoffbehälters mit Gewindebuchsen versehen ist. Hierbei sind vorzugsweise eine Mehrzahl von Gewindebuchsen vorgesehen, die sich um den Umfang verteilen. Das hintere Teilstück des Kunststoffbehälters kann über die Gewindebuchsen mit der Umfangswandung verschraubt sein. Dadurch ergibt sich eine stabile und dauerhafte Fixierung des Kunststoffbehälters in der Umfangswandung.

Vorzugsweise kann dabei vorgesehen sein, dass der Kunststoffbehälter nicht nur mit der Umfangswandung verschraubt ist, sondern formschlüssig von dieser umgeben wird.

Erfindungsgemäß kann vorgesehen sein, dass der zur Aufnahme des hinteren Teilstücks des Kunststoffbehälters vorgesehene Umfangswandungsteil einstückig mit der Umfangswandung ausgebildet ist. Dabei kann eine Zwischenwand vorgesehen sein, um von dem durch die Umfangswandung gebildeten ersten Befüllraum wenigstens das zur Aufnahme des hinteren Teilstücks des Kunststoffbehälters vorgesehen Umfangswandungsteil abzugrenzen. Die Zwischenwand kann hierbei als Trennwand ausgebildet werden, welche den ersten Befüllraum somit konstruktiv von dem Kunststoffbehälter trennt, so dass eine dichte Verbindung zwischen dem Kunststoffbehälter und der Umfangswandung um Leckagen zu verhindern, nicht notwendig ist.

Alternativ dazu kann erfindungsgemäß auch vorgesehen sein, dass die Umfangswandung wenigstens aus zwei Umfangswandungsteilen (Segmenten) zusammengesetzt ist, wobei ein Umfangswandungsteil zur Aufnahme des hinteren Teilstücks des Kunststoffbehälters vorgesehen ist. Bei diesem Umfangswandungsteil kann es sich vorzugsweise um ein verglichen mit dem anderen Umfangswandungsteil kleines Segment handeln. Von Vorteil ist es, wenn das zur Aufnahme des hinteren Teilstücks des Kunststoffbehälters vorgesehen Umfangswandungsteil mit einem angrenzenden zweiten Umfangswandungsteil - welches im Regelfall den ersten Befüllraum ausbilden wird - über eine Zwischenwand verbunden ist. In einer Weiterbildung der Erfindung kann dabei vorgesehen sein, dass die Zwischenwand ein wenigstens annähernd ringförmiges Kopfteil aufweist, an dessen beiden zu den Stirnseiten des Kraftstoffbehälters gerichteten Seiten Auflageschultern angeordnet sind, wobei die Umfangswandungsteile jeweils dicht mit einer der beiden Auflageschultern verbunden sind. Vorzugsweise können die Umfangswandungsteile dabei jeweils mit ihrer inneren Umfangswand auf der Auflageschulter aufliegen. Die Verbindung der Umfangswandungsteile mit der Zwischenwand bzw. miteinander kann dabei über eine orbitalen Schweißnaht erfolgen. Eine besonders bevorzugte Verbindung einer Zwischenwand mit zwei angrenzenden Umfangswandungsteilen ist in der DE 20 2005 021 121.4 beschrieben, auf die hiermit vollumfänglich Bezug genommen wird.

Vorteilhafte Weiterbildungen und Ausgestaltungen der Erfindung ergeben sich aus den weiteren Unteransprüchen. Die bezüglich Anspruch 1 aufgeführten Unteransprüche können analog auch bezüglich der erfindungsgemäßen Lösung nach Anspruch 26 eingesetzt bzw. als vorteilhafte Ausgestaltungen hiermit kombiniert werden.

Die sich aus den Unteransprüchen 27 bis 40 ergebenden Ausführungsformen können analog auch bei der erfindungsgemäßen Lösung nach Anspruch 1 eingesetzt bzw. als vorteilhafte Ausgestaltungen hiermit kombiniert werden.

Nachfolgend ist anhand der Zeichnung ein Ausführungsbeispiel der Erfindung prinzipmäßig dargestellt.

Es zeigt:
- Fig. 1: eine perspektivische Darstellung eines erfindungsgemäßen Kraftstoffbehälters in einer ersten Ausführungsform, mit einer Darstellung einer Konsole mit drei Konsolenelementen, an welchen der Kraftstoffbehälter befestigbar ist;
- Fig. 2: eine perspektivische Darstellung eines erfindungsgemäßen Kraftstoffbehälters nach Fig. 1, wobei ein Teil der Umfangswandung zur Verdeutlichung des Innenlebens des Kraftstoffbehälters zeichnerisch nicht dargestellt ist;
- Fig. 3: eine perspektivische Darstellung eines stirnseitigen Endes des Kraftstoffbehälters in einer zweiten Ausführungsform mit einer Umfangswandung, in welche ein Kunststoffbehälter eingesteckt ist;
- Fig. 4: eine Darstellung gemäß Fig. 3 mit einem Teilschnitt durch den Kunststoffbehälter zur Darstellung der Gewindebuchsen zur Anbindung an die Umfangswandung;
- Fig. 5: ein mögliches Einbaubeispiel des erfindungsgemäßen Kraftstoffbehälters nach Fig. 1 oder Fig. 3 unter Ausnutzung des zur Verfügung stehenden Bauraums eines Nutzfahrzeugs;
- Fig. 6: eine prinzipmäßige Darstellung des erfindungsgemäßen Kraftstoffbehälters mit einer Verbindungsleitung zur Verbindung eines ersten Befüllraums mit einem zweiten Befüllraum;
- Fig. 7: eine perspektivische Darstellung eines erfindungsgemäßen Kunststoffbehälters, welcher in ein stirnseitiges Ende einer Umfangswandung eingesetzt ist und an eine Zwischenwand der Umfangswandung angrenzt;
- Fig. 8: eine perspektivische Darstellung auf das vordere Teilstück eines Kunststoffbehälters gemäß Fig. 7;
- Fig. 9: eine perspektivische Darstellung von unten auf einen Kunststoffbehälter gemäß Fig. 7;
- Fig. 10: eine vergrößerte Darstellung der Einzelheit X gemäß Fig. 9.
- Fig. 11: eine perspektivische Darstellung des Kunststoffbehälters gemäß Fig. 7 ohne eine Darstellung der Umfangswandung;
- Fig. 12: eine prinzipmäßige Darstellung einer Befestigung eines Kunststoffbehälters an einer Stirnseite einer Umfangswandung;
- Fig. 13: eine weitere prinzipmäßige Darstellung einer Befestigung eines Kunststoffbehälters an einer Stirnseite einer Umfangswandung;
- Fig. 14: eine weitere prinzipmäßige Darstellung einer Befestigung eines Kunststoffbehälters an einer Stirnseite einer Umfangswandung;
- Fig. 15: eine weitere prinzipmäßige Darstellung einer Befestigung eines Kunststoffbehälters an einer Stirnseite einer Umfangswandung.

Das dargestellte und nachfolgend beschriebene Ausführungsbeispiel zeigt einen Kraftstoffbehälter, der für Nutzfahrzeuge (vorzugsweise Lastkraftwagen) ausgebildet ist. Da Kraftstoffbehälter dieser Art allgemein bekannt sind, wird nachfolgend nur auf die für die Erfindung wesentlichen Teile des Kraftstoffbehälters näher eingegangen.

Die Figuren zeigen einen Kraftstoffbehälter 1 für Nutzfahrzeuge mit einer Umfangswandung 2, welche einen ersten Befüllraum 3 zur Aufnahme eines flüssigen oder gasförmigen Mediums ausbildet. Die Umfangswandung 2 ist im Ausführungsbeispiel aus Metall, genauer aus Aluminium ausgebildet. In Frage kommt jedoch auch die Ausgestaltung aus einem anderen metallischen Werkstoff oder aus einem Kunststoff. Der Befüllraum 3 ist zur Aufnahme eines Diesel- oder Biodieselkraftstoffes vorgesehen. Vorgesehen ist eine Ausbildung des Kraftstoffbehälters 1 als großvolumigen Kraftstoffbehälter, dessen Umfangswandung 2 einen Befüllraum 3 mit einer Aufnahmekapazität von 300 bis 1.600 Litern, vorzugsweise 500 bis 1.000 Litern, ausbildet.

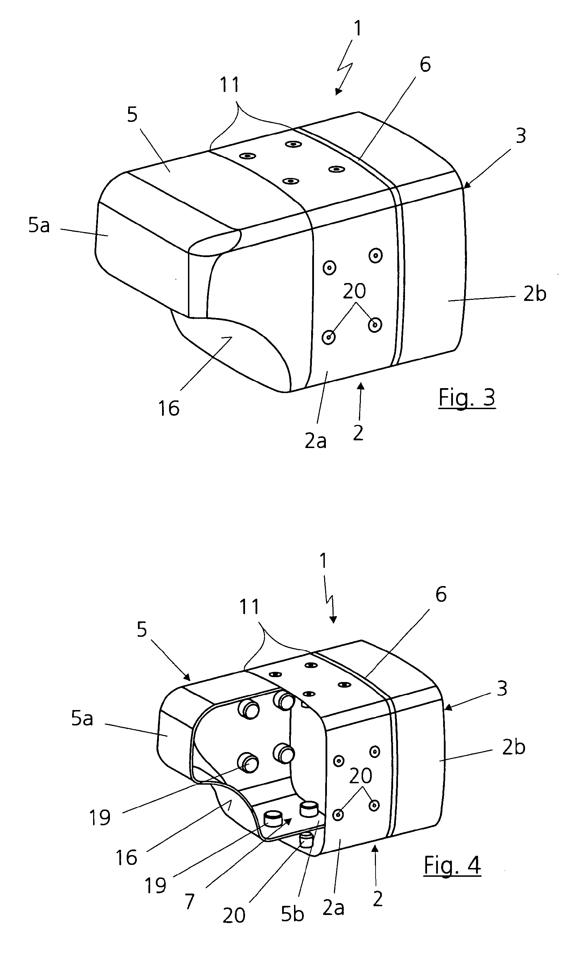

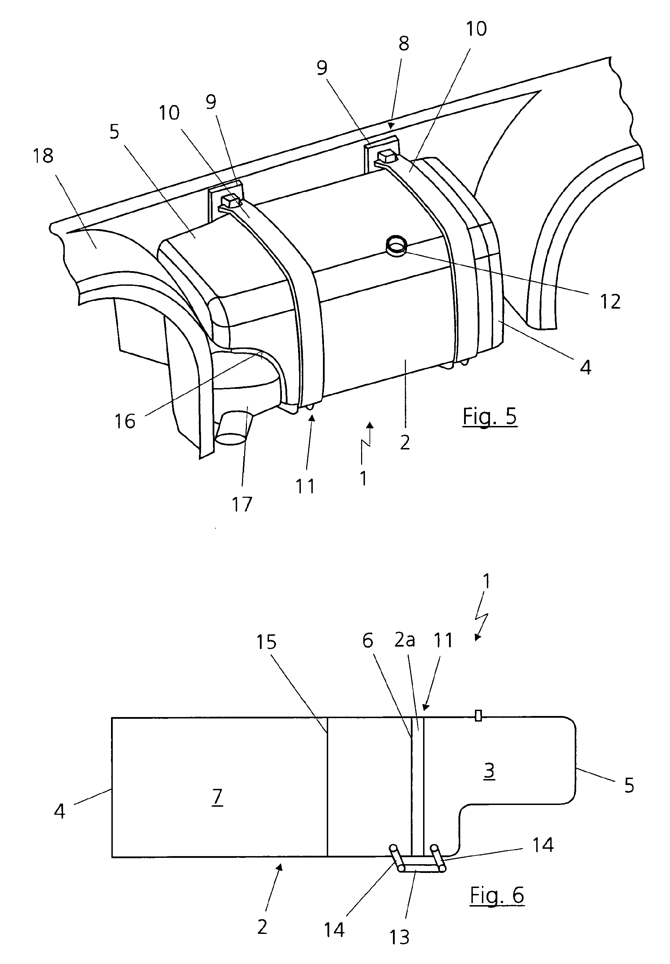

Die rohrförmige Umfangswandung 2 weist zwei Stirnseiten auf, wobei eine Stirnseite in bekannter Weise mittels einer Stirnwandung 4 verschlossen ist. An der anderen Stirnseite der Umfangswandung 2 ist ein Kunststoffbehälter 5 angeschlossen bzw. mit der Umfangswandung 2 verbunden. Im Ausführungsbeispiel ist dabei vorgesehen, dass der Befüllraum 3 mittels einer Trennwand 6 von dem Kunststoffbehälter 5 abgegrenzt ist. Im Ausführungsbeispiel ist hierzu in Fig. 6 eine mögliche Anordnung der Trennwand 6 dargestellt. Eine bevorzugte Anordnung der Trennwand 6 ergibt sich aus den Figuren 3 und 4.

Der Kunststoffbehälter 5 bildet einen zweiten Befüllraum 7 aus, so dass der Kraftstoffbehälter 1 zwei separate Befüllräume 3, 7 aufweist.

Der Befüllraum 3 wird durch die Umfangswandung 2, die Stirnwand 4 und die Trennwand 6 gebildet, während der zweite Befüllraum 7 durch den Kunststoffbehälter 5 gebildet ist.

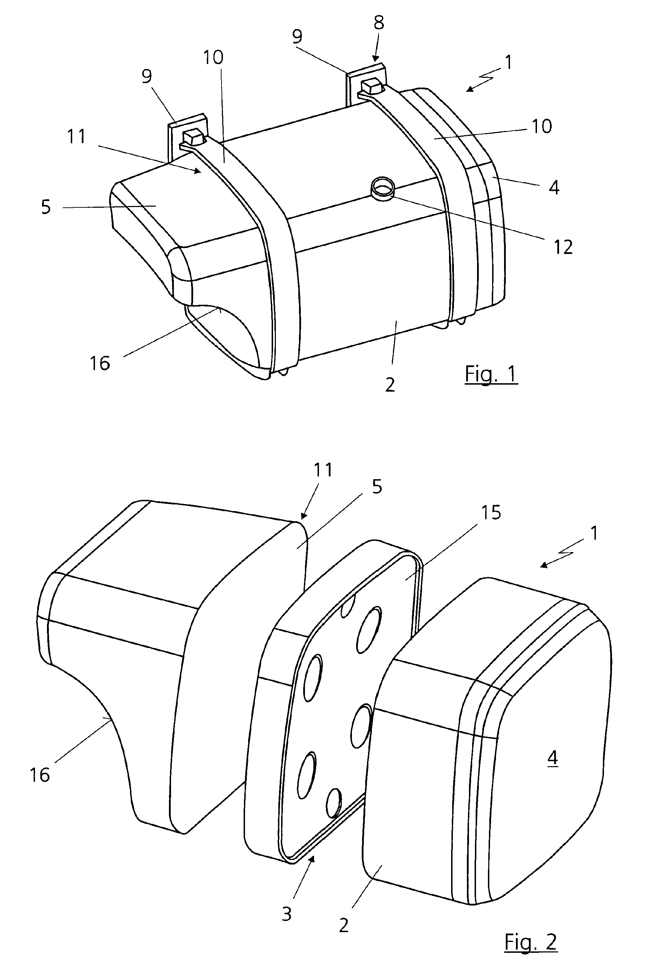

In der gemäß Fig. 1 und Fig. 2 dargestellten Ausführungsform ist die Art und Weise der Verbindung des Kunststoffbehälters 5 mit der Umfangswandung 2 nicht näher dargestellt. Eine bevorzugte Art der Verbindung des Kunststoffbehälters 5 mit der Umfangswandung 2 ergibt sich in der Folge aus Fig. 3 und Fig. 4.

Gemäß der in Fig. 1 und Fig. 2 dargestellten Ausführungsform kann vorgesehen sein, dass der Kunststoffbehälter 5 mit der Umfangswandung 2 in beliebiger Art und Weise, beispielsweise durch Einsintern, Ineinanderstecken, mechanische Verbindungselemente oder auf andere Art und Weise form-, kraft- oder stoffschlüssig miteinander verbunden ist. Die Umfangswandung 2 und der Kunststoffbehälter 5 sollen so miteinander verbunden bzw. kombiniert werden, dass sie gemeinsam an einer Konsole 8 eines in Fig. 5 nur anhand von Anbauteilen dargestellten Nutzfahrzeuges angebracht bzw. verspannt werden können. Die Konsole 8 kann dabei in bekannter Weise gestaltet sein. Gemäß der in Fig. 1 und 5 dargestellten Ausführungsform weist die Konsole 8 drei Konsolenelemente 9 auf, die jeweils im wesentlichen eine horizontale und eine vertikale Anlagefläche ausbilden. Zum Verspannen des Kraftstoffbehälters 1 an den Konsolenelementen 9 sind entsprechende Spannbänder 10 vorgesehen. Im Ausführungsbeispiel ist dabei vorgesehen, dass ein Konsolenelement 9 und ein Spannband 10 im Verbindungsbereich 11 zwischen der Umfangswandung 2 und dem Kunststoffbehälter 5 verläuft.

In der Ausführungsform gemäß Fig. 1, Fig. 2 und Fig. 5 ist vorgesehen, dass die Befüllräume 3, 7 einen gemeinsamen Einfüllstutzen 12 und gegebenenfalls weitere gemeinsame Funktionselemente aufweisen (nicht dargestellt). Die Befüllräume 3, 7 können dabei durch eine in Fig. 6 dargestellte Verbindungsleitung 13 miteinander verbunden sein. Hierzu ist vorgesehen, dass in die Umfangswandung 2 und den Kunststoffbehälter 5 jeweils eine Verbindungsmuffe 14 eingeschweißt und/oder eingesintert ist, welche zu den zugeordneten Befüllräumen 3, 7 führt, wobei die Verbindungsmuffen 14 über die Verbindungsleitung 13 miteinander verbunden sind.

Gemäß der in Fig. 1, Fig. 2 und Fig. 6 dargestellten Ausführungsform des Kraftstoffbehälters 1 ist vorgesehen, dass in die Umfangswandung 2 eine Schwallwand 15 eingebracht ist.

Die Figuren 3 und 4 zeigen eine besonders bevorzugte Ausgestaltung des Kraftstoffbehälters 1 in Bezug auf die Verbindung des Kunststoffbehälters 5 mit der Umfangswandung 2. Dabei ist vorgesehen, dass der Kunststoffbehälter 5 in eine offene Stirnseite der Umfangswandung 2 derart eingesetzt ist, dass das hintere Teilstück 5a des Kunststoffbehälters 5 in die Umfangswandung 2 ragt und mit der Umfangswandung 2 verbunden ist. Das vordere Teilstück 5b des Kunststoffbehälters 5 steht über die Stirnseite der Umfangswandung 2 über. Das hintere Teilstück 5a des Kunststoffbehälters 5 ist an den Verlauf der Umfangswandung 2 angepasst, in welchen das hintere Teilstück 5a eingesetzt ist.

Das vordere Teilstück 5b des Kunststoffbehälters 5 weist eine komplexe Form auf. Das vordere Teilstück 5b des Kunststoffbehälters 5 weist dabei im wesentlichen eine Form auf, welche an den zur Verfügung stehenden Bauraum eines Nutzfahrzeugs angepasst ist. Dies ist aus Fig. 5 analog bezogen auf die in Fig. 1 und Fig. 2 dargestellte Ausführungsform ersichtlich.

Das vordere Teilstück 5b des Kunststoffbehälters 5 weist dabei eine Einbuchtung 16 auf, die einen Freiraum zur Aufnahme eines Endbereiches eines Abgassystems 17 des Nutzfahrzeugs schafft.

In nicht näher dargestellter Weise kann das vordere Teilstück 5b des Kunststoffbehälters 5 wenigstens annähernd an den Verlauf eines Radkastens 18 des Nutzfahrzeugs angepasst sein.

In der Ausführungsform gemäß Fig. 3 und Fig. 4 ist vorgesehen, dass der durch den Kunststoffbehälter 5 gebildete zweite Befüllraum 7 zur Aufnahme eines vom ersten Befüllraum 3 unabhängigen flüssigen oder gasförmigen Mediums ausgebildet ist. Der zweite Befüllraum 7 ist dabei mit dem ersten Befüllraum 3 nicht verbunden. Bei dem zusätzlichen flüssigen oder gasförmigen Medium handelt es sich vorzugsweise um einen weiteren Kraft- oder Betriebsstoff, vorzugsweise um einen Harnstoff, Biodiesel, einen Zweitkraftstoff, eine Betriebsstoffkomponente bzw. Drittstoffkomponente oder Wasser.

Aufgrund der Hybridbauweise Aluminium/Kunststoff des Kraftstoffbehälters 1 eignet es sich in besondere Weise in den Befüllraum 7 ein flüssiges Medium einzubringen, welches aufgrund seiner chemischen Aggressivität eine Kunststoffhülle benötigt. Der erfindungsgemäße Kraftstoffbehälter 1 ermöglicht es somit in einfacher Weise Harnstoff oder Ad Blue aufzunehmen, um die Umweltverträglichkeit des im Befüllraum 3 eingebrachten Dieselkraftstoffs zu verbessern.

In der in Fig. 3 und Fig. 4 dargestellten Ausführungsform ist vorgesehen, dass jeder Befüllraum 3, 7 einen unabhängigen Einfüllstutzen und/oder weitere notwendige Funktionselemente aufweist, die jedoch nicht dargestellt sind.

Eine mögliche Verbindung des hinteren Teilstücks 5a des Kunststoffbehälters 5 mit der Umfangswandung 2 besteht darin, dass das hintere Teilstück 5a des Kunststoffbehälters 5 in die Umfangswandung 2 eingesintert ist. Das hintere Teilstück 5a des Kunststoffbehälters 5 und die Umfangswandung 2 können dabei eine Form und/ oder einen Verlauf aufweisen, der nach dem Einsintern zu einer Fixierung des Kunststoffbehälters 5 in der Umfangswandung führt.

Eine besonders bevorzugte Möglichkeit, das hintere Teilstück 5a des Kunststoffbehälters 5 mit der Umfangswandung 2 zu verbinden, besteht, wie in Fig. 3 und Fig. 4 dargestellt, darin, das hintere Teilstück 5a des Kunststoffbehälters 5 mit Gewindebuchsen 19 zu versehen. Das hintere Teilstück 5a des Kunststoffbehälters 5 kann somit über die Gewindebuchsen 19 mit der Umfangswandung 2 verschraubt werden. Hierzu können bekannte Schrauben 20 eingesetzt werden. Die Gewindebuchsen 19 in dem hinteren Teilstück 5a können durch Sintern hergestellt werden. Die Gewindebuchsen 19 durchbrechen nicht die Kunststoffhülle des Befüllraumes 7. Vorgesehen sind über den Umfang des hinteren Teilstücks 5a verteilt eine Mehrzahl von eingesinterten Gewindebuchsen 19. Im Ausführungsbeispiel sind hierzu zwei umlaufende Reihen von Gewindebuchsen 19 vorgesehen.

Das zur Aufnahme des hinteren Teilstücks 5b des Kunststoffbehälters 5 vorgesehene Umfangswandungsteil 2a kann einstückig mit der Umfangswandung 2 ausgebildet sein. Dabei kann eine Zwischenwand in Form einer Trennwand vorgesehen sein, um von dem durch die Umfangswandung 2 gebildeten ersten Befüllraum 3 wenigstens das zur Aufnahme des hinteren Teilstücks 5a des Kunststoffbehälters 5 vorgesehen Umfangswandungsteil 2a abzugrenzen (in Fig. 6 prinzipmäßig dargestellt). Die Einstückigkeit der Umfangswandung 2 bleibt in diesem Fall erhalten, die Trennwand 6 dient lediglich dazu, den Befüllraum 3 unabhängig von dem Kunststoffbehälter 5 dicht abzuschließen.

Im Ausführungsbeispiel gemäß Fig. 3 und Fig. 4 ist vorgesehen, dass die Umfangswandung 2 wenigstens aus zwei Umfangswandungsteilen 2a, 2b zusammengesetzt ist, wobei ein Umfangswandungsteil 2a zur Aufnahme des hinteren Teilstücks 5a des Kunststoffbehälters 5 vorgesehen ist. Die Umfangswandung 2 setzt sich somit wenigstens aus zwei Segmenten zusammen. Die Umfangswandungsteile 2a, 2b können in beliebiger Art und Weise miteinander verbunden werden. In der in Fig. 3 und Fig. 4 dargestellten Ausführungsform ist vorgesehen, dass das zur Aufnahme des hinteren Teilstücks 5a des Kunststoffbehälters 5 vorgesehene Umfangswandungsteil 2a mit einem angrenzenden zweiten Umfangswandungsteil 2b über eine Zwischenwand in Form einer Trennwand 6 verbunden ist. Die Verbindung kann dabei in der Art und Weise erfolgen, wie dies in der DE 20 2005 021 121.4 beschrieben ist, d. h. mit einer Zwischenwand, welche ein Kopfteil aufweist, an dessen beiden zu den Stirnseiten des Kraftstoffbehälters 1 gerichteten Seiten Auflageschultern angeordnet sind, wobei die Umfangswandungsteile 2a, 2b jeweils dicht mit einer der beiden Auflageschultern verbunden sind (nicht dargestellt). Die Umfangswandungsteile 2a, 2b liegen jeweils mit ihrer inneren Umfangswand auf der Auflageschulter auf (ebenfalls nicht dargestellt).

Selbstverständlich kann auch bei der in Fig. 3 und Fig. 4 dargestellten Ausführungsform des Kraftstoffbehälters 1 vorgesehen sein, dass die Befüllräume 3, 7 über eine Verbindungsleitung 13 miteinander verbunden sind.

Des weiteren kann bei allen dargestellten Ausführungsformen vorgesehen sein, dass der erste Befüllraum 3 durch den Einsatz entsprechender Trennwände 6 in weitere Befüllräume unterteilt ist.

Des weiteren kann erfindungsgemäß vorgesehen sein, dass beide Stirnseiten der Umfangswandung 2 mit jeweils einem Kunststoffbehälter 5 versehen sind. In diesem Fall ist es vorzugsweise vorgesehen, dass die Umfangswandung 2 wenigstens zwei Trennwände 6 aufweist, die jeweils den ersten Befüllraum 3 zu den Kunststoffbehältern 5 abgrenzen.

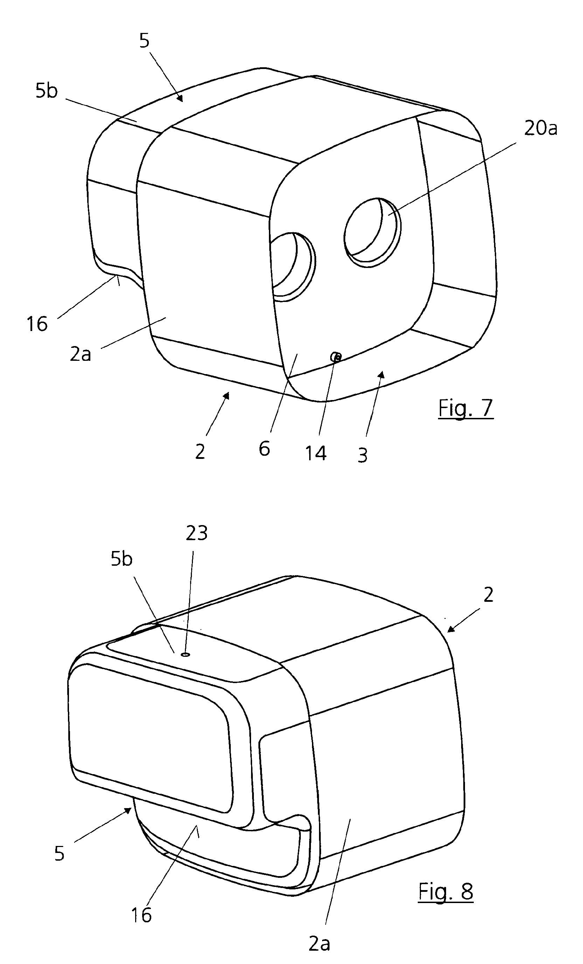

Die Figuren 7 bis 11 zeigen eine besonders vorteilhafte Möglichkeit, um einen Kunststoffbehälter 5 an einer Stirnseite der Umfangswandung 2 zu befestigen.

Die in den Figuren 7 bis 11 dargestellte Ausführungsform des Kunststoffbehälters 5 eignet sich insbesondere für Kraftstoffbehälter 1 für Nutzfahrzeuge mit einer Umfangswandung 2, welche wenigstens einen ersten Befüllraum 3 zur Aufnahme eines flüssigen oder gasförmigen Mediums ausbildet, wobei an wenigstens einer Stirnseite der Umfangswandung 2 ein Kunststoffbehälter 5 mit einer komplexen Form befestigt werden soll, welcher einen zweiten Befüllraum 7 ausbildet und im Wesentlichen eine Form aufweist, welche an den zur Verfügung stehenden Bauraum des Nutzfahrzeugs angepasst ist.

Die in den Figuren 7 bis 11 beschriebene Ausführungsform kann auch bei den Ausführungsformen, wie diese bezüglich der Figuren 1 bis 6 beschrieben wurden, eingesetzt werden.

Insofern bezüglich der nachfolgenden Beschreibung der Ausführungsform gemäß Fig. 7 bis Fig. 11 keine anderweitigen Ausführungen gemacht werden, lassen sich die Merkmale und Ausführungsformen gemäß der Figuren 1 bis 6 auch auf die Figuren 7 bis 11 anwenden. Insbesondere ist auch gemäß der in Fig. 7 bis Fig. 11 dargestellten Ausführungsform vorgesehen, dass die Umfangswandung 2 aus Metall, vorzugsweise aus Aluminium ausgebildet ist. In Frage kommt jedoch auch die Ausgestaltung aus einem anderen metallischen Werkstoff oder aus einem Kunststoff.

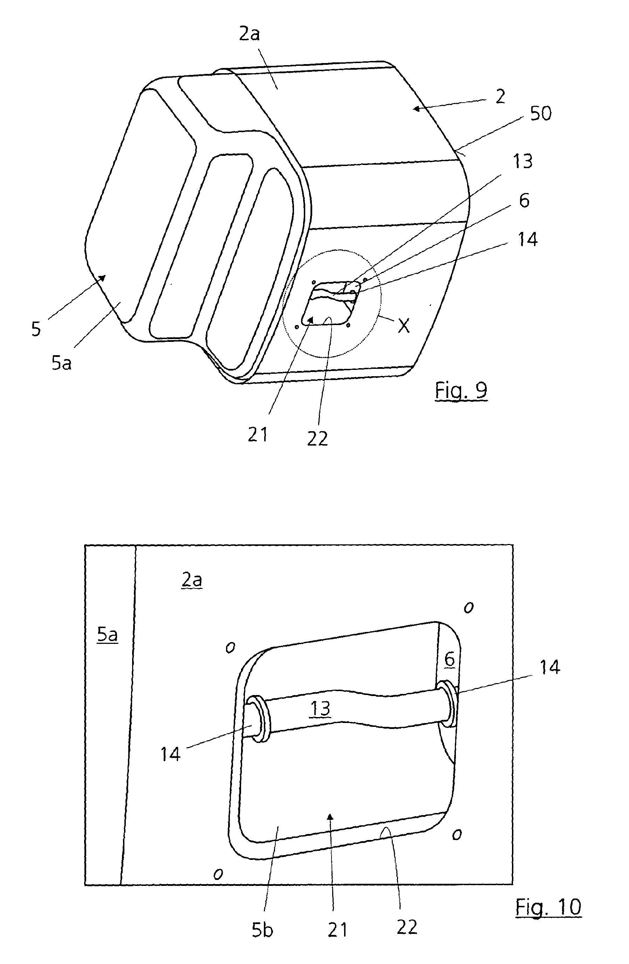

In den Figuren 7 bis 11 ist zur Vereinfachung lediglich ein Ausschnitt der Umfangswandung 2 dargestellt. Vorgesehen ist eine Zwischenwand 6 in Form einer Trennwand, um von dem durch die Umfangswandung 2 gebildeten ersten Befüllraum 3 ein zur Aufnahme eines hinteren Teilstücks 5a des Kunststoffbehälters 5 vorgesehenes Umfangswandungsteil 2a abzugrenzen. Die Trennwand 6 ist in Fig. 7 und ausschnittsweise in Fig. 9 und 10 dargestellt. Die Trennwand 6 ist dicht in die Umfangswandung 2 eingeschweißt.

Der Kunststoffbehälter 5 weist eine hintere Stirnseite 50 auf, welche an die dem Kunststoffbehälter 5 zugewandte Seite der Trennwand 6 angrenzt. Die Trennwand 6 und die Stirnseite 50 des Kunststoffbehälters 5 weisen dabei aufeinander ausgerichtete bzw. miteinander korrespondierende Vorsprünge, Verprägungen 20a, 20b oder andere wenigstens teilweise formschlüssige Verbindungselemente zur Fixierung des Kunststoffbehälters auf. Im Ausführungsbeispiel weist die Trennwand 6 zwei Verprägungen 20a auf. Die Verprägungen 20a sind in Form von wenigstens annähernd kreisförmigen Auswölbungen auf entsprechende Verprägungen 20b in der Stirnseite 50 des Kunststoffbehälters 5 ausgerichtet. Die Verprägungen 20b in der Stirnseite 50 des Kunststoffbehälters 5 sind korrespondierend zu den Verprägungen 20a als im Wesentlichen kreisförmige Vertiefungen ausgebildet.

Wie aus Fig. 7, Fig. 9 und Fig. 10 ersichtlich ist, ist in die Trennwand 6 eine Verbindungsmuffe 14 dicht eingeschweißt. Die Verbindungsmuffe 14 ist dabei im unteren Bereich des Kraftstoffbehälters 1 angeordnet. Wie weiterhin aus den Figuren 9, 10 und 11 ersichtlich ist, ist in das hintere Teilstück 5a des Kunststoffbehälters 5 ebenfalls eine Verbindungsmuffe 14 eingesintert. Die beiden Verbindungsmuffen 14 sind über eine Verbindungsleitung 13 verbunden. Die Verbindungsleitung 13 ist dabei flexibel ausgestaltet.

Der Kunststoffbehälter 5 weist in seinem hinteren Teilstück 5a eine Aussparung, einen Rücksprung, einen Freiraum oder eine Freisparung 21 auf. Die Freisparung 21 bewirkt dabei, dass die Stirnseite 50 des Kunststoffbehälters 5 in einem Teilbereich nicht an die Trennwand 6 angrenzt, sondern zurückversetzt ist. Die Freisparung 21 ist derart angeordnet, dass diese von der Unterseite und (sofern noch nicht in der Umfangswandung 2 eingesetzt) von der Stirnseite 50 des Kunststoffbehälters 5 zugänglich ist. Die Verbindungsmuffen 14 sind jeweils derart angeordnet, dass diese von ihren Befüllräumen 3, 7 in die Freisparung 21 führen bzw. in dieser münden. In der Freisparung 21 wird dabei die Verbindungsleitung 13 angeordnet bzw. eingesetzt, so dass die Verbindungsmuffen 14 miteinander verbunden werden. Dies ist in Fig. 9 und im Detail in Fig. 10 entsprechend dargestellt. Die Freisparung 21 ermöglicht es, dass die Verbindungsmuffen 14 einfach mittels der Verbindungsleitung 13 miteinander verbunden werden können. Wie sich ferner aus den Figuren 9 und 10 ergibt, weist die Umfangswandung 2 bzw. das Umfangswandungsteil 2a eine Aussparung 22 in Form einer Montageöffnung auf, so dass die Freisparung 21 von außen zugänglich ist. Die Aussparung 22 kann in bekannter Weise, beispielsweise durch eine Verschraubung, mit einem nicht dargestellten Deckel versehen bzw. verschlossen werden.

Die Freisparung 21 befindet sich vorzugsweise im Bereich eines tiefsten Punkt des Kraftstoffbehälters 1, so dass die Befüllräume 3, 7 auch noch Kraftstoff austauschen können, wenn die Befüllräume 3, 7 annähernd leer sind.

Gemäß Anspruch 26 ist beansprucht, dass der Kunststoffbehälter 5 eine komplexe Form aufweisen soll. Vorzugsweise soll die komplexe Form des Kunststoffbehälters 5 ermöglichen, dass der Kraftstoffbehälter 1 an den zur Verfügung stehenden Bauraum eines Nutzfahrzeugs angepasst ist. In einer besonders einfachen Ausführungsform kann auch vorgesehen sein, dass der Kunststoffbehälter 5 eine einfache Form mit nur einer oder gar keiner Abstufung aufweist. Dies eignet sich besonders dann, wenn der Kunststoffbehälter 5 einen Befüllraum 7 zur Aufnahme eines gasförmigen oder flüssigen Mediums ausbilden soll, welcher nicht mit dem Befüllraum 3 verbunden ist. Der Vorteil besteht darin, dass der Befüllraum 7 zur Aufnahme eines aggressiven Mediums genutzt werden kann, welches nicht in einem durch Metall gebildeten Befüllraum 7 aufgenommen werden kann.

Im Ausführungsbeispiel gemäß den Figuren 7 bis 11 ist vorgesehen, dass der Kunststoffbehälter 5 im oberen Bereich eine Entlüftungsöffnung 23 aufweist.

Bei allen gemäß den Figuren 1 bis 15 dargestellten Ausführungsformen kann vorgesehen sein, dass die Anbindung des Kunststoffbehälters 5 an eine Konsole 8 eines Nutzfahrzeugs lediglich über die Umfangswandung 2 erfolgt. Der Kunststoffbehälter 5 ist somit nicht direkt an die Konsole 8 angebunden. Aus dem Stand der Technik bekannte Lösungen hatten bislang immer eine getrennte Anbindung eines Kunststoffbehälters und eines metallischen Behälters vorgesehen. Die erfindungsgemäße Lösung ermöglicht es nunmehr, dass ein Kraftstoffbehälter 1, welcher z. B. aus einem metallischen Befüllraum 3 und einem aus Kunststoff gebildeten Befüllraum 7 besteht, als ein Tank gehandhabt werden kann. Darüber hinaus kann die Anbindung an die Konsole 8 lediglich über die Umfangswandung 2 erfolgen. Grundsätzlich ist es auch vorstellbar, die Anbindung an die Konsole 8 lediglich über den Kunststoffbehälter 5 durchzuführen. Dies eignet sich jedoch nur bei einer besonders großen Ausgestaltung des Kunststoffbehälters 5.

In einer nicht näher dargestellten Ausgestaltung kann vorgesehen sein, dass der Kunststoffbehälter mit Aufstiegshilfen, Stufen oder dergleichen versehen ist. Des weiteren kann der Kunststoffbehälter 5 Traversen für eine Blechaufnahme aufweisen, damit der Kraftstoffbehälter 1 an seiner Oberseite begehbar ist.

Des weiteren kann der Kunststoffbehälter und zumindest der Umfangswandungsteil, in den dieser eingeschoben wird, eine Kontur mit einem Verlauf aufweisen, der eine formschlüssige Verbindung zwischen dem Kunststoffbehälter und dem Umfangswandungsteil ermöglicht, sobald der Kunststoffbehälter in das Umfangswandungsteil eingeschoben ist.

In ebenfalls nicht näher dargestellter Weise kann vorgesehen sein, dass in der in den Figuren 7 bis 11 dargestellten Ausführungsformen ein Spannband 10 in dem Bereich verläuft, in dem der Kunststoffbehälter 5 aus dem Umfangswandungsteil 2a ragt.

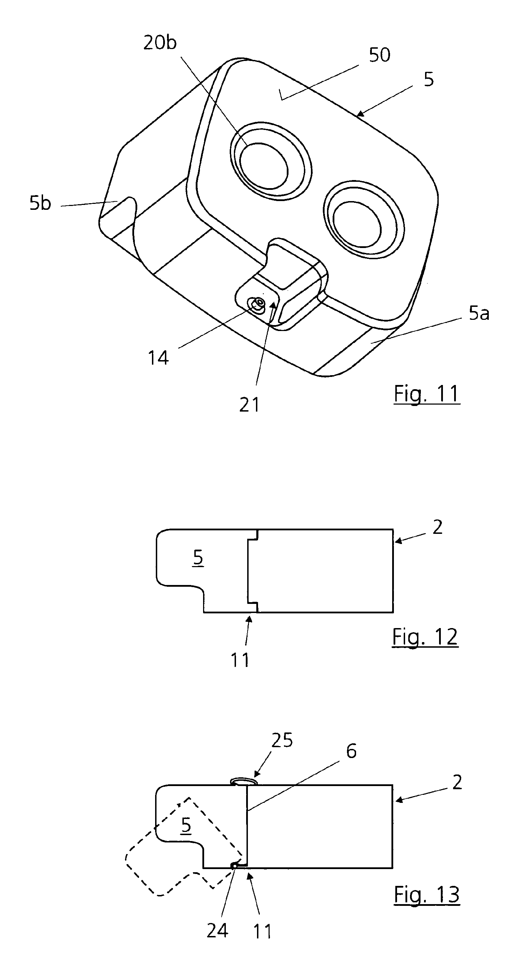

Fig. 12 zeigt eine Variante, bei der der Kunststoffbehälter 5 nicht in die Umfangswandung 2 eingesteckt, sondern auf die offene Stirnseite der Umfangswandung 2 aufgesteckt ist bzw. diese umfasst. Dabei kann vorgesehen sein, dass die Umfangswandung 2 im Bereich der offenen Stirnseite eine Verjüngung aufweist. Die gemäß den Figuren 1 bis 11 beschriebenen Merkmale und Ausgestaltungen können überwiegend auch bei dieser Lösung analog eingesetzt werden. Vorzugsweise kann gemäß Fig. 12 vorgesehen sein, dass ein Spannband 10 den Bereich umfasst bzw. in dem Bereich verläuft, in dem der Kunststoffbehälter 5 die offene Stirnseite der Umfangswandung 2 umfasst.

Die Figuren 13 bis 15 zeigen weitere Varianten, um den Kunststoffbehälter 5 an einer offenen Stirnseite der Umfangswandung 2 zu befestigen.

Fig. 13 sieht vor, dass der Kunststoffbehälter 5 an einer Seite, vorzugsweise der Unterseite, an der Umfangswandung 2 befestigt, beispielsweise eingehakt, wird (Befestigungsstelle 24). Anschließend wird der Kunststoffbehälter 5 verschwenkt und verspannt. Das Verspannen kann dabei mittels einer Spanneinrichtung 25 erfolgen.

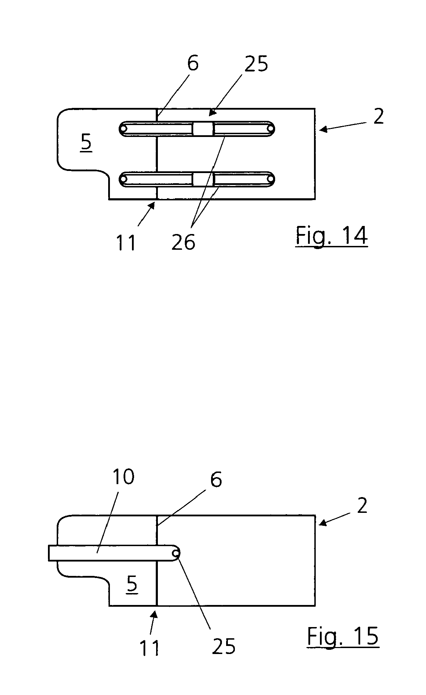

Fig. 14 zeigt Varianten zu Fig. 13, wobei auf eine Befestigungsstelle 24 zum Einhaken verzichtet wird und die Verspannung über einen oder mehrere konsolenartige bzw. schienenförmige Träger 26 erfolgt. Dabei kann eine Spanneinrichtung 25 oder auch nur ein Spannelement eingesetzt werden. In der in Fig. 14 dargestellten Ausführungsform ist es vorteilhaft, wenn der Kunststoffbehälter 5 zunächst in die Umfangswandung 2 eingesteckt und dann verspannt wird. Die Spannkraft kann dabei beispielsweise von entsprechenden Vorsprüngen oder beispielsweise von der Trennwand 6 aufgefangen werden.

Gemäß Fig. 14 kann auf ein Spannelement vollständig verzichtet werden, wenn die konsolenartigen Träger nach dem Einstecken des Kunststoffbehälters 5 in die Umfangswandung 2 direkt mit der Umfangswandung 2 und dem Kunststoffbehälter 5 verbunden, vorzugsweise verschraubt, werden.

Fig. 15 zeigt eine weitere Variante zur Befestigung des Kunststoffbehälters 5 an der Umfangswandung 2, welche grundsätzlich bei allen vorstehend beschriebenen Ausführungsformen gemäß den Figuren 1 bis 14 alternativ oder ergänzend eingesetzt werden kann. Hierbei ist vorgesehen, dass ein Spannband 10 an der Umfangswandung 2 eingehängt wird und derart verläuft, dass dieses die Stirnseite des Kunststoffbehälters 5, welche ein Ende des Kraftstoffbehälters 1 bildet, umfasst. Der Kunststoffbehälter 5 kann somit in axialer Richtung nach dem Anbringen des Spannbandes 5 nicht mehr relativ zu der Umfangswandung 2 bewegt werden. An den Anbindungsstellen des Spannbandes 10 an der Umfangswandung 2 kann gegebenenfalls ein Spannelement 25 vorgesehen sein, um die Spannkraft des Spannbandes 10 zu regulieren.

## Patentansprüche

1. Kraftstoffbehälter für Nutzfahrzeuge, mit einer Umfangswandung, welche wenigstens einen ersten Befüllraum zur Aufnahme eines flüssigen oder gasförmigen Mediums ausbildet,
**dadurch gekennzeichnet, dass**
in wenigstens eine offene Stirnseite der Umfangswandung (2) ein Kunststoffbehälter (5) eingesetzt ist, dessen hinteres Teilstück (5a) in die Umfangswandung (2) ragt und mit der Umfangswandung (2) verbunden ist und dessen vorderes Teilstück (5b) über die Stirnseite der Umfangswandung (2) übersteht.

2. Kraftstoffbehälter nach Anspruch 1,
**dadurch gekennzeichnet, dass**
die Umfangswandung (2) aus Metall gebildet ist.

3. Kraftstoffbehälter nach Anspruch 2,
**dadurch gekennzeichnet, dass**
die Umfangswandung (2) aus Aluminium, Stahl oder Edelstahl ausgebildet ist.

4. Kraftstoffbehälter nach einem der Ansprüche 1 bis 3,
**dadurch gekennzeichnet, dass**
das hintere Teilstück (5a) des Kunststoffbehälters (5) an den Verlauf der Umfangswandung (2) angepasst ist, in welchen das hintere Teilstück (5a) eingesetzt ist.

5. Kraftstoffbehälter nach einem der Ansprüche 1 bis 4,
**dadurch gekennzeichnet, dass**
das vordere Teilstück (5b) des Kunststoffbehälters (5) eine komplexe Form aufweist.

6. Kraftstoffbehälter nach einem der Ansprüche 1 bis 5,
**dadurch gekennzeichnet, dass**
das vordere Teilstück (5b) des Kunststoffbehälters (5) im wesentlichen eine Form aufweist, welche an den zur Verfügung stehenden Bauraum eines Nutzfahrzeugs angepasst ist.

7. Kraftstoffbehälter nach Anspruch 6,
**dadurch gekennzeichnet, dass**
das vordere Teilstück (5b) des Kunststoffbehälters (5) wenigstens eine Einbuchtung (16) aufweist, die einen Freiraum zur Aufnahme eines Endbereichs eines Abgassystems (17) des Nutzfahrzeugs schafft.

8. Kraftstoffbehälter nach Anspruch 6 oder 7,
**dadurch gekennzeichnet, dass**
das vordere Teilstück (5b) des Kunststoffbehälters (5) wenigstens annähernd an den Verlauf eines Radkastens (18) des Nutzfahrzeugs angepasst ist.

9. Kraftstoffbehälter nach einem der Ansprüche 1 bis 8,
**dadurch gekennzeichnet, dass**
der Kunststoffbehälter (5) einen zweiten Befüllraum (7) zur Aufnahme eines flüssigen oder gasförmigen Mediums ausbildet.

10. Kraftstoffbehälter nach Anspruch 9,
**dadurch gekennzeichnet, dass**
der zweite Befüllraum (7) mit dem ersten Befüllraum (3) nicht verbunden und zur Aufnahme eines zusätzlichen flüssigen oder gasförmigen Mediums, vorzugsweise eines weiteren Kraft- oder Betriebsstoffes, ausgebildet ist.

11. Kraftstoffbehälter nach Anspruch 10,
**dadurch gekennzeichnet, dass**
es sich bei dem weiteren Kraft- oder Betriebsstoff um einen Harnstoff, Biodiesel, einen Zweitkraftstoff, eine Betriebsstoffkomponente bzw. Drittstoffkomponente oder Wasser handelt.

12. Kraftstoffbehälter nach Anspruch 9,
**dadurch gekennzeichnet, dass**
der durch den Kunststoffbehälter (5) gebildete zweite Befüllraum (7) mit dem durch die Umfangswandung (2) gebildeten ersten Befüllraum (3) verbunden ist.

13. Kraftstoffbehälter nach Anspruch 12,
**dadurch gekennzeichnet, dass**
zur Verbindung der Befüllräume (3,7) wenigstens eine Verbindungsleitung (13) vorgesehen ist.

14. Kraftstoffbehälter nach Anspruch 12 oder 13,
**dadurch gekennzeichnet, dass**
in die Umfangswandung (2) und den Kunststoffbehälter (5) jeweils eine Verbindungsmuffe (14) eingeschweißt und/oder eingesintert ist, welche zu den zugeordneten Befüllräumen (3,7) führt, wobei die Verbindungsmuffen (14) über die Verbindungsleitung (13) miteinander verbunden sind.

15. Kraftstoffbehälter nach Anspruch 12, 13 oder 14,
**dadurch gekennzeichnet, dass**
die Befüllräume (3,7) einen gemeinsamen Einfüllstutzen (12) und/oder weitere gemeinsame Funktionselemente aufweisen.

16. Kraftstoffbehälter nach einem der Ansprüche 1 bis 15,
**dadurch gekennzeichnet, dass**
das hintere Teilstück (5a) des Kunststoffbehälters (5) in die Umfangswandung (2) eingesintert ist.

17. Kraftstoffbehälter nach Anspruch 16,
**dadurch gekennzeichnet, dass**
das hintere Teilstück (5a) des Kunststoffbehälters (5) und die Umfangswandung (2), in welche der Kunststoffbehälter (5) eingesetzt ist, eine Form und/oder einen Verlauf aufweisen, der nach dem Einsintern zu einer Fixierung des Kunststoffbehälters (5) in der Umfangswandung (2) führt.

18. Kraftstoffbehälter nach einem der Ansprüche 1 bis 17,
**dadurch gekennzeichnet, dass**
das hintere Teilstück (5a) des Kunststoffbehälters (5) mit Gewindebuchsen (19) versehen ist.

19. Kraftstoffbehälter nach Anspruch 18,
**dadurch gekennzeichnet, dass**
das hintere Teilstück (5a) des Kunststoffbehälters (5) über die Gewindebuchsen (19) mit der Umfangswandung (2) verschraubt ist.

20. Kraftstoffbehälter nach einem der Ansprüche 1 bis 19,
**dadurch gekennzeichnet, dass**
der zur Aufnahme des hinteren Teilstücks (5a) des Kunststoffbehälters (5) vorgesehene Umfangswandungsteil (2a) einstückig mit der Umfangswandung (2) ausgebildet ist.

21. Kraftstoffbehälter nach Anspruch 20,
**dadurch gekennzeichnet, dass**
eine Zwischenwand (6) vorgesehen ist, um von dem durch die Umfangswandung (2) gebildeten ersten Befüllraum (3) wenigstens das zur Aufnahme des hinteren Teilstücks (5a) des Kunststoffbehälters (5) vorgesehene Umfangswandungsteil (2a) abzugrenzen.

22. Kraftstoffbehälter nach einem der Ansprüche 1 bis 19,
**dadurch gekennzeichnet, dass**
die Umfangswandung (2) wenigstens aus zwei Umfangswandungsteilen (2a,2b) zusammengesetzt ist, wobei ein Umfangswandungsteil (2a) zur Aufnahme des hinteren Teilstücks (5a) des Kunststoffbehälters (5) vorgesehen ist.

23. Kraftstoffbehälter nach Anspruch 22,
**dadurch gekennzeichnet, dass**
das zur Aufnahme des hinteren Teilstücks (5a) des Kunststoffbehälters (5) vorgesehene Umfangswandungsteil (2a) mit einem angrenzenden zweiten Umfangswandungsteil (2b) über eine Zwischenwand (6) verbunden ist.

24. Kraftstoffbehälter nach Anspruch 23,
**dadurch gekennzeichnet, dass**
die Zwischenwand (6) ein wenigstens annähernd ringförmiges Kopfteil aufweist, an dessen beiden zu den Stirnseiten des Kraftstoffbehälters (1) gerichteten Seiten Auflageschultern angeordnet sind, wobei die Umfangswandungsteile (2a,2b) jeweils dicht mit einer der beiden Auflageschultern verbunden sind.

25. Kraftstoffbehälter nach Anspruch 24,
**dadurch gekennzeichnet, dass**
die Umfangswandungsteile (2a,2b) jeweils mit ihrer inneren Umfangswand auf der Auflageschulter aufliegen.

26. Kraftstoffbehälter für Nutzfahrzeuge, mit einer Umfangswandung, welche wenigstens einen ersten Befüllraum zur Aufnahme eines flüssigen oder gasförmigen Mediums ausbildet,
**dadurch gekennzeichnet, dass**
an wenigstens eine Stirnseite der Umfangswandung (2) ein Kunststoffbehälter (5) mit einer komplexen Form befestigt ist, welcher einen zweiten Befüllraum (7) ausbildet und im wesentlichen eine Form aufweist, welche an den zur Verfügung stehenden Bauraum des Nutzfahrzeugs angepasst ist.

27. Kraftstoffbehälter nach Anspruch 26,
**dadurch gekennzeichnet, dass**
die Anbindung des Kunststoffbehälters (5) an eine Konsole (8) eines Nutzfahrzeugs lediglich über die Umfangswandung (2) erfolgt.

28. Kraftstoffbehälter nach Anspruch 26 oder 27,
**dadurch gekennzeichnet, dass**
der Kunststoffbehälter (5) zur Verbindung mit der Umfangswandung (2) in eine offene Stirnseite der Umfangswandung (2) eingesetzt ist oder die Umfangswandung (2) im Bereich der offenen Stirnseite umfasst.

29. Kraftstoffbehälter nach Anspruch 28,
**dadurch gekennzeichnet, dass**
ein hinteres Teilstück (5a) des Kunststoffbehälters (5), welches zur Anbindung an die Umfangswandung (2) vorgesehen ist, zur formschlüssigen Verbindung an den Verlauf der Umfangswandung (2) angepasst ist.

30. Kraftstoffbehälter nach einem der Ansprüche 26 bis 29,
**dadurch gekennzeichnet, dass**
eine Zwischenwand (6) vorgesehen ist, um von dem durch die Umfangswandung (2) gebildeten ersten Befüllraum (3) ein zur Aufnahme des hinteren Teilstücks (5a) des Kunststoffbehälters (5) vorgesehenes Umfangswandungsteil (2a) abzugrenzen.

31. Kraftstoffbehälter nach Anspruch 30,
**dadurch gekennzeichnet, dass**
die Zwischenwand (6) und eine an die Zwischenwand (6) angrenzende hintere Stirnwand (50) des Kunststoffbehälters (5) miteinander korrespondierende Verprägungen (20a, 20b), Auskragungen oder andere wenigstens teilweise formschlüssige Verbindungselemente zur Fixierung des Kunststoffbehälters (5) aufweisen.

32. Kraftstoffbehälter nach Anspruch 30 oder 31,
**dadurch gekennzeichnet, dass**
in die Zwischenwand (6) eine Verbindungsmuffe (14) eingeschweißt ist.

33. Kraftstoffbehälter nach Anspruch 30, 31 oder 32,
**dadurch gekennzeichnet, dass**
in das hintere Teilstück (5a) des Kunststoffbehälters (5) eine weitere Verbindungsmuffe (14) eingesintert ist.

34. Kraftstoffbehälter nach Anspruch 32 oder 33,
**dadurch gekennzeichnet, dass**
die Verbindungsmuffen (14) jeweils zu den zugeordneten Befüllräumen (3,7) führen, wobei die Verbindungsmuffen (14) über eine Verbindungsleitung (13) miteinander verbunden sind.

35. Kraftstoffbehälter nach einem der Ansprüche 30 bis 34,
**dadurch gekennzeichnet, dass**
das hintere Teilstück (5a) des Kunststoffbehälters (5) eine Aussparung, einen Rücksprung oder eine Freisparung (21) aufweist, durch welche die Stirnwand (50) von der Zwischenwand (6) zurückversetzt ist.

36. Kraftstoffbehälter nach Anspruch 35,
**dadurch gekennzeichnet, dass**
die Verbindungsmuffe (14) der Zwischenwand (6) und die Verbindungsmuffe (14) in dem hinteren Teilstück (5a) des Kunststoffbehälters (5) jeweils derart angeordnet sind, dass diese in die Freisparung (21) münden.

37. Kraftstoffbehälter nach Anspruch 36,
**dadurch gekennzeichnet, dass**
die Verbindungsleitung (13) zur Verbindung der Verbindungsmuffen (14) in der Freisparung (21) angeordnet ist.

38. Kraftstoffbehälter nach Anspruch 37,
**dadurch gekennzeichnet, dass**
die Freisparung (21) in einem unteren Bereich des Kraftstoffbehälters (1) bzw. des Kunststoffbehälters (5) angeordnet ist.

39. Kraftstoffbehälter nach Anspruch 38,
**dadurch gekennzeichnet, dass**
der Umfangswandungsteil (2a) im Bereich der Freisparung (21) eine Aussparung (22) aufweist, so dass die Freisparung (21) von außen zugänglich ist.

40. Kraftstoffbehälter nach Anspruch 39,
**dadurch gekennzeichnet, dass**
die Freisparung (21) verschließbar ist.
